# EUROPÄISCHE PATENTANMELDUNG

(11) **EP 4 438 232 A1**
(43) Veröffentlichungstag der Anmeldung: **02.10.2024**
(21) Anmeldenummer: 23164989.8
(22) Anmeldetag: 29.03.2023
(51) Int. Cl.: B25D 16/00, B25D 11/00, F16H 1/12, F16H 1/16

(54) **BOHRHAMMERMASCHINE MIT MEHRFACHANTRIEB**

(71) Anmelder: Hilti Aktiengesellschaft, 9494 Schaan (LI)
(72) Erfinder: Knyrim, Maximilian, 89584 Ehingen (DE); Hinterstoißer, Michael, 82275 Emmering (DE)
(74) Vertreter: Hilti Aktiengesellschaft Corporate Intellectual Property

(57) **Zusammenfassung**

Die Erfindung betrifft eine Bohrhammermaschine mit einem handhaltbaren Maschinengehäuse (1) zur Unterbringung elektrischer Antriebsmittel, umfassend eine erste elektromotorische Antriebseinheit (4), die dazu eingerichtet ist, eine Werkzeugaufnahmeeinheit (3) für ein Bohrwerkzeug (2) mit einer Drehbewegung anzutreiben, eine zweite elektromotorische Antriebseinheit (5), die dazu eingerichtet ist, eine Schlagwerkseinheit (6) zur Erzeugung einer alternierend linearen Bewegung für eine zusätzlich rückwärtige Beaufschlagung des Bohrwerkzeugs (2) anzutreiben, wobei die Drehachsen (A_{M1}, A_{M2}) der beiden elektromotorischen Antriebseinheiten (4, 5) benachbart zueinander und quer zur Schlagwerksachse (As) verlaufen, wozu eine erste Getriebeeinheit (7; 7') zur abgewinkelten Untersetzung einer Drehbewegung der ersten elektromotorischen Antriebseinheit (4) für den Antrieb der Werkzeugaufnahmeeinheit (3) vorgesehen ist, und eine zweite Getriebeeinheit (8) zur Umwandlung der Drehbewegung der zweiten elektromotorischen Antriebseinheit (5) in die alternierend lineare Bewegung zum Antrieb der Schlagwerkseinheit (6) vorgesehen ist.

## Beschreibung

Die Erfindung betrifft eine Bohrhammermaschine mit einem handhaltbaren Maschinengehäuse zur Unterbringung elektrischer Antriebsmittel, umfassend eine erste elektromotorische Antriebseinheit, die dazu eingerichtet ist, eine Werkzeugaufnahmeeinheit für ein Bohrwerkzeug mit einer Drehbewegung anzutreiben, sowie eine zweite elektromotorische Antriebseinheit, die dazu eingerichtet ist, eine Schlagwerkseinheit zur Erzeugung einer alternierend linearen Bewegung für eine zusätzlich rückwärtige Beaufschlagung des Bohrwerkzeugs anzutreiben, wobei die Drehachsen der beiden elektromotorischen Antriebseinheiten benachbart zueinander und quer zur Schlagwerksachse verlaufen, wozu eine erste Getriebeeinheit zur abgewinkelten Untersetzung - also einer Übersetzung ins Langsame - einer Drehbewegung der ersten elektromotorischen Antriebseinheit für den Antrieb der Werkzeugaufnahmeeinheit vorgesehen ist, und eine zweite Getriebeeinheit zur Umwandlung der Drehbewegung der zweiten elektromotorischen Antriebseinheit in die alternierend lineare Bewegung zum Antrieb der Schlagwerkseinheit dient.

Das Einsatzgebiet der Erfindung erstreckt sich vornehmlich auf handgehaltene Elektrowerkzeuge mit Schlagwerk, insbesondere Bohrhammermaschinen oder Schlagbohrmaschinen. Hierbei wird eine drehende Arbeitsbewegung eines Bohrwerkzeus zusätzlich mit einer Hin- und Her-Bewegung, also einer alternierend linearen Bewegung, überlagert, welche von einem Schlagwerk des Elektrohandwerkzeugs generiert wird. Ein solches Schlagwerk für höhere Leistungsklassen ist in an sich bekannter Weise vorzugsweise pneumatisch wirkend ausgebildet. Bei der hier interessierenden Bauform einer Bohrhammermaschine ist der Schlagwerkseinheit ein eigener Antrieb zugeordnet. Hieraus resultiert die konstruktive Herausforderung, beide Antriebseinheiten möglichst funktionsgerecht und bauraumsparend innerhalb des Maschinengehäuses unterzubringen und mit geeigneten Getriebeeinheiten an die Werkzeugaufnahmeeinheit bzw. die Schlagwerkseinheit anzukoppeln.

Das Einsatzgebiet der Erfindung ist jedoch hinsichtlich der speziellen Getriebeeinheiten nicht allein beschränkt auf Bohrhammermaschinen, sondern lässt sich auch auf andere Elektrohandwerkzeuge, wie Bohrmaschinen, Schlaghämmer und dergleichen übertragen, falls deren Antriebseinheit quer zur Werkzeugachse verläuft.

### Stand der Technik

Aus der DE 3 142 740 A1 geht eine gattungsgemäße Bohrhammermaschine mit zwei Antriebseinheiten hervor, von denen die eine Antriebseinheit die drehende Werkzeugaufnahmeeinheit betreibt, wohingegen die zweite Antriebseinheit ein Schlagwerk in Exzenter-Bauart betreibt, welches mittels eines Pleuels als Getriebeelement die Drehbewegung der elektromotorischen Antriebseinheit in eine alternierend lineare Bewegung zum Antrieb der Schlagwerkseinheit umwandelt. Parallel benachbart zur ersten Antriebseinheit ist eine zweite Antriebseinheit im Maschinengehäuse untergebracht, welche ein Kegelradgetriebe nutzt, um die antriebsseitige Drehbewegung winkelversetzt auf die Schlagwerksachse umzulenken. Hiermit ist allerdings nur ein geringfügiges Untersetzungsverhältnis der motorseitigen Antriebsdrehzahl realisierbar.

Ergänzend sei darauf hingewiesen, dass dieser Stand der Technik in einer anderen Ausführungsform eine Antriebsanordnung offenbart, bei welcher beide elektromotorischen Antriebseinheiten koaxial in Reihe zueinander angeordnet sind. Zur Drehmomentübertragung ist hier eine relative großbauende Hohlwelle mit entsprechenden Anschlussgetriebemitteln erforderlich.

Aus der DE 2 343 661 A1 geht eine Bohrhammermaschine hervor, welche ebenfalls zwei elektromotorische Antriebseinheiten besitzt, die rechtwinklig zueinander innerhalb eines handhaltbaren Maschinengehäuses untergebracht sind. Dabei ist eine erste elektromotorische Antriebseinheit zum Drehantrieb einer Werkzeugaufnahmeeinheit parallelachsig zur Schlagwerksachse angeordnet. Die zweite elektromotorische Antriebseinheit ist zum Antrieb der Schlagwerkseinheit vorgesehen und senkrecht zur Schlagwerksachse angeordnet. Der aus der Parallelanordnung der ersten elektromotorischen Antriebseinheit resultierende Achsversatz erfordert weitere Getriebemittel zwecks Überbrückung. Aus dieser winkligen Anordnung der elektrischen Antriebseinheiten resultiert eine relativ großbauende Bohrhammermaschine.

Es ist daher die Aufgabe der vorliegenden Erfindung eine Bohrhammermaschine der gattungsgemäßen Art dahingehend weiter zu verbessern, dass mit einfachen technischen Mitteln eine kompakte Bauform erzielt wird, wobei mit wenigen Einzelbauteilen ein hohes Untersetzungsverhältnis der Getriebemittel zum Drehantrieb erzielbar sein soll.

### Offenbarung der Erfindung

Die Aufgabe wird ausgehend von einer Bohrhammermaschine gemäß dem Oberbegriff von Anspruch 1 in Verbindung mit dessen kennzeichnenden Merkmalen gelöst. Daneben wir die Aufgabe auch ausgehend von einer Bohrhammermaschine gemäß demselben Oberbegriff des nebengeordneten Anspruchs 8 in Verbindung mit dessen kennzeichnenden Merkmalen gelöst. Die jeweils rückbezogenen abhängigen Ansprüche geben vorteilhafte Weiterbildungen der Erfindung wieder.

Die Erfindung schließt die technische Lehre ein, dass die erste Getriebeeinheit in der ersten Variante als Schneckengetriebe derart ausgebildet ist, dass eine Schneckenwelle koaxial an einer Motorwelle der ersten elektromotorischen Antriebseinheit angeordnet ist, und ein hiermit zusammenwirkendes Schneckenrad koaxial bezüglich der Werkzeugaufnahmeeinheit angeordnet ist.

Mit anderen Worten beinhaltet die erfindungsgemäße Lösung, dass die quer zur Schlagwerksachse verlaufende erste elektromotorische Antriebseinheit zur Erzeugung der Werkzeugdrehbewegung über ein kompaktes Getriebe in Form eines Schneckengetriebes angebunden ist, welches zum einen bauartbedingt ein großes Untersetzungsverhältnis mit sich bringt, wenn die Schneckenwelle an der Motorwelle angeordnet ist. Die Anwendbarkeit eines an sich bekannten Schneckengetriebes auf eine hier interessierende Bohrhammermaschine hat sich aus der Erkenntnis ergeben, dass sich das mit der Schneckenwelle üblicherweise zusammenwirkwende Schneckenrad koaxial bezüglich der Werkzeugaufnahmeeinheit innerhalb des Maschinengehäuses unterbringen lässt. Zwar resultiert hieraus eine Durchmessererweiterung der die Werkzeugaufnahmeeinheit antreibenden und gehäuseinnenliegenden Komponenten; allerdings lässt sich dieser Platzbedarf durch eine Schrägstellung der Motorwelle begrenzen, so dass dennoch insgesamt eine kompakte Bauform entsteht, welche ein besonders hohes Untersetzungsverhältnis mit sich bringt. Hierdurch können weitere Getriebestufen oder Zahnradkomponenten entfallen.

Dieselben Vorteile sind mit der alternativen Variante der ersten Getriebeeinheit als sogenanntes Planspiralgetriebe verbunden. Im vorliegenden speziellen Anwendungsfall ist ein Planspiralrad koaxial an einer Motorwelle der ersten elektromotorischen Antriebseinheit angeordnet und ein hiermit zusammenwirkendes Zahnrad ist koaxial bezüglich der Werkzeugaufnahmeeinheit angeordnet. Bauartbedingt zeichnet sich ein ebenfalls an sich bekanntes Planspiralgetriebe durch ein hohes Untersetzungsverhältnis aus. Der Unterschied zu einem Schneckengetriebe besteht insbesondere darin, dass nicht korrespondierende Zahnradzähne miteinander in Eingriff kommen, sondern aufgrund der Planspirale mehrere tragende Kontaktstellen zwischen Planspiralrad und dem hiermit zusammenwirkenden Zahnrad entstehen, so dass stets eine Zahnüberdeckung von größer als 1, vorzugsweise größer als 3, besteht. Hierdurch wird pro Zahn eine geringere Last übertragen, was eine kleinere Dimensionierung gestattet. Neben einer Erhöhung des Wirkungsgrades zeichnet sich ein Planspiralgetriebe auch durch eine besonders hohe Laufruhe aus, welche keine zusätzliche Erregerfrequenz generiert. Dies leistet einen Beitrag zur Minimierung von Gehäuseschwingungen der Bohrhammermaschine.

Ein weiterer Vorteil eines Planspiralgetriebes gegenüber einem Schneckengetriebe besteht darin, dass sich dieses ähnlich wie bei einem Kegeltrieb senkrecht zur abtreibenden Achse anordnen lässt. Das Planspiralgetriebe ermöglicht dabei jedoch eine viel höhere Übersetzung als ein Kegeltrieb. Hierdurch werden insgesamt weniger Zahnradbauteile benötigt. Zusätzlich wird in der Raumebene weniger Bauraum benötigt.

Da bei einem Planspiralgetriebe das abtreibende Zahnrad im Gegensatz zu einem Kegeltrieb frei von hohen Axialkräften ist, vereinfacht sich die Lagerung.

Vorzugsweise sollte bei der erfindungsgemäßen Anwendung das Planspiralrad am distalen Ende der Motorwelle angeordnet sein, welche über ein axial benachbartes Wälzlager drehgelagert ist. Die erforderliche Drehlagerung der Motorwelle lässt sich somit kompaktbauend mit dem Planspiralgetriebe vereinigen. Eine zweite Lagerstelle der Motorwelle kann innerhalb der elektromotorischen Antriebseinheit angeordnet sein.

Gemäß einer bevorzugten Ausführungsform des für die erste Getriebeeinheit zum Einsatz kommenden Planspiralgetriebes weist das Planspiralrad Flankenwinkel zwischen 40 bis 70 Grad auf, welcher mit einer Steigung zwischen 0,5 bis 5 mm, vorzugsweise zwischen 1 bis 3 mm verbunden ist. Dieser Flankenwinkelbereich stellt einen sicheren Zahneingriff bezüglich des hiermit zusammenwirkenden Zahnrades sicher und die mit der Planspirale realisierte Steigung führt zu einem gewünscht großen Untersetzungsverhältnis.

Ist die erste Getriebeeinheit dagegen als alternatives Schneckengetriebe realisiert, so wird gemäß einer bevorzugten Ausführungsform vorgeschlagen, dass die Schneckenwelle des Schneckengetriebes zwischen zwei axial beabstandet zueinander am hervorstehenden Abschnitt der Motorwelle angeordneten Wälzlagern drehgelagert ist. Hierdurch wird eine sichere Zweipunktlagerung geschaffen, welche einen exakten Zahneingriff in Verbindung mit dem Schneckenrad sicherstellt. Alternativ zum motornahen Wälzlager kann dieses auch in die Motoreinheit integriert ausgeführt sein.

Gemäß einer weiteren die Erfindung verbessernden Maßnahme wird vorgeschlagen, dass die Drehachse der ersten elektromotorischen Antriebseinheit radial zur Schlagwerksachse und in der Raumebene um einen Versatzwinkel α bezüglich der Schlagwerksachse verläuft. Der Versatzwinkel α ist dabei abhängig vom Durchmesser des Schneckenrades und vorzugsweise im Bereich zwischen 10 bis 60 Grad, besonders bevorzugt im Bereich zwischen 20 und 40 Grad. Insbesondere die engere Bereichsauswahl gestattet eine funktionsgerechte und gleichsam kompaktbauende Anordnung der ersten elektromotorischen Antriebseinheit samt Schneckengetriebe innerhalb des Maschinengehäuses.

Zur Realisierung eines möglichst großen Untersetzungsverhältnisses weist die Schneckenwelle vorzugsweise eine kontinuierliche Gewindesteigung zwischen 1 bis 10 mm auf. Für eine optimale Momentübertragung zum Schneckenrad bei gleichzeitigem Kompaktbau ist es hinreichend, wenn die Gewindelänge der Schneckenwelle im Bereich zwischen 5 bis 30 mm liegt.

Das Schneckenrad des Schneckengetriebes gemäß der ersten Alternative der vorliegenden Erfindung bzw. das Zahnrad des Planspiralgetriebes gemäß der alternativen Variante ist vorzugsweise um ein Führungsrohr einer pneumatischen Schlagwerkseinheit der Bohrhammermaschine herum angeordnet, so dass mit der Integration der ersten Getriebeeinheit in der jeweiligen Variante keine Baulängenvergrößerung in Schlagwerksachsrichtung verbunden ist. Dabei bildet das Schneckenrad des Schneckengetriebes bzw. das Zahnrad des Planspiralgetriebes eine Loslagerstelle gemeinsam mit dem Führungsrohr der Schlagwerkseinheit. Die Momentübertragung erfolgt in diesem Fall über eine das Führungsrohr umgebende Hohlwelle, die einerseits am Schneckenrad bzw. am Zahnrad befestigt ist und andererseits an der Werkzeugaufnahmeeinheit befestigt ist. Die Hohlwelle kann dabei in Form einer zylindrischen Blechhülse ausgeführt werden.

In beiden erfindungsgegenständlichen Varianten liefert die erste Getriebeeinheit der erfindungsgegenständlichen Bohrhammermaschine vorzugsweise ausgehend von einer Eingangsdrehzahl der ersten elektromotorischen Antriebseinheit im Bereich zwischen 5.000 bis 30.000 min⁻¹ ein Untersetzungsverhältnis von 1:10 bis 1:100. Hiermit lässt sich die Werkzeugaufnahmeeinheit im gewünschten Drehzahlbereich antreiben. In Verbindung damit wird vorgeschlagen, dass zumindest die erste elektromotorische Antriebseinheit als ein bürstenloser Gleichstrommotor ausgebildet wird, welcher sich drehzahlvariabel ansteuern lässt. Hierdurch können je nach Werkzeugdurchmesser mehrere Drehzahlbereiche realisiert werden.

Um einen maximalen Kompaktbau zu erzielen, wird ferner vorgeschlagen, dass die Drehachse der ersten elektromotorischen Antriebseinheit rechtwinklig bezüglich der Schlagwerksache verläuft und auch die Drehachse der zweiten elektromotorischen Antriebseinheit rechtwinklig bezüglich der Schlagwerksachse verläuft. Hierdurch können die beiden elektromotorischen Antriebseinheiten direkt benachbart in geringem Abstand zueinander im Maschinengehäuse unter Verwendung besonders kompaktbauender Getriebeeinheiten zur Wirkrichtungsumlenkung verbaut werden. In unmittelbarer Nachbarschaft zueinander lassen sich die Drehachsen der beiden elektromotorischen Antriebseinheiten mit einem Achsabstand im Bereich zwischen vorzugsweise 50 bis 250 mm bei Bohrhammermaschinen der hier interessierenden Art zueinander anordnen.

Dementsprechend wird vorgeschlagen, die zweite Getriebeeinheit als Exzentertrieb mit Pleuel zum alternierend linearen Antrieb eines Erregerkolbens der pneumatischen Schlagwerkseinheit auszubilden. Bei einem Exzentertrieb wird eine an die Motorwelle angebrachte mechanische Steuerscheibe verwendet, deren Mittelpunkt außerhalb der Wellenachse liegt. Die Steuerscheibe ist von einem Gleitlagerring mit Pleuel umgeben, welcher aus der exzentrischen Drehbewegung die gewünschte Hin- und Her-Bewegung zum Antrieb des Erregerkolbens der pneumatischen Schlagwerkseinheit erzeugt.

Gemäß einer weiteren die Erfindung verbessernden Maßnahme wird vorgeschlagen, dass alle leistungsübertragenden Komponenten der ersten Getriebeeinheit und der zweiten Getriebeeinheit als Metallteile ausgebildet sind, wobei zumindest eine der jeweiligen Komponenten aus einer Buntmetall-Legierung besteht, ausgewählt aus einer Legierungsgruppe, umfassend Messing, Bronze, Rotguss, was selbst bei hoher Getriebebeanspruchung eine lange Standzeit der Getriebeeinheit sicherstellt.

### Detailbeschreibung anhand Zeichnung

Weitere die Erfindung verbessernde Maßnahmen werden gemeinsam mit der Beschreibung bevorzugter Ausführungsbeispiele der Erfindung anhand der Figuren näher dargestellt. Es zeigt:
- Fig. 1: eine schematische Seitenansicht einer Bohrhammermaschine mit zwei elektromotorischen Antriebseinheiten,
- Fig. 2: einen schematischen Teillängsschnitt von Antriebsmitteln der Bohrhammermaschine gemäß Fig. 1 in der ersten Erfindungsvariante,
- Fig. 3: eine schematische Schnittansicht im Schnitt A-A der Fig. 2,
- Fig. 4: eine schematische Schnittansicht im Schnitt B-B der Fig. 2,
- Fig. 5: einen Längsschnitt durch eine Schneckenwelle des Schneckengetriebes als erste Getriebeeinheit,
- Fig. 6: einen schematischen Teillängsschnitt von Antriebsmitteln der Bohrhammermaschine gemäß Fig. 1 in einer zweiten Erfindungsvariante,
- Fig. 7: eine schematische Schnittansicht im Schnitt A-A der Fig. 6,
- Fig.: 8a eine schematische Draufsicht auf eine Planspirale des Planspiralgetriebes als erste Getriebeeinheit, und
- Fig. 8b: einen schematischen Längsschnitt eines Planspiralrads des Planspiralgetriebes.

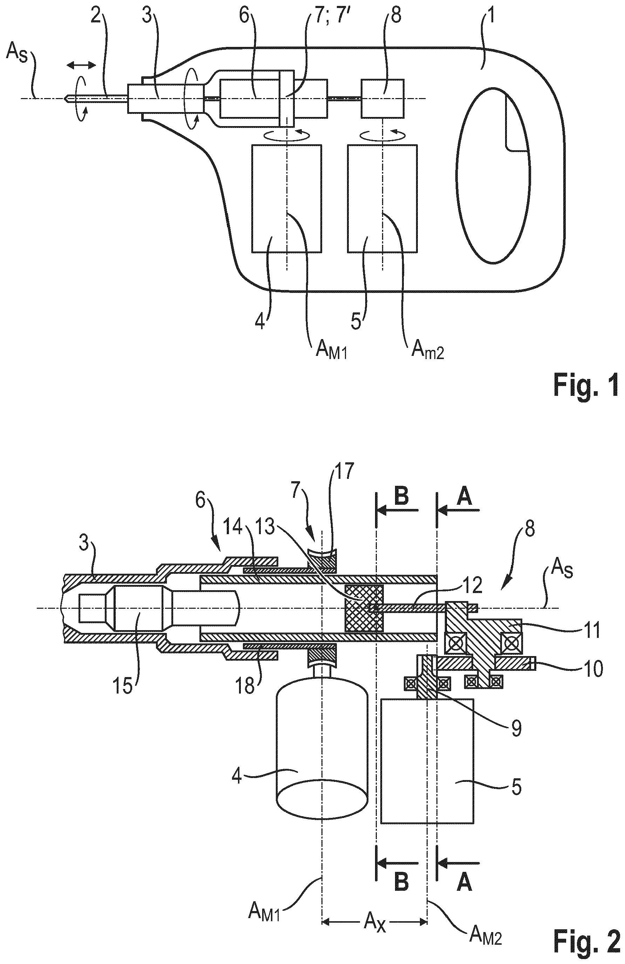

Gemäß Fig. 1 umfasst eine Bohrhammermaschine mehrere in einem handhaltbaren Maschinengehäuse 1 untergebrachte Baueinheiten eines hier blockschaltbildmäßig dargestellten Antriebsstrangs, welcher zur Betätigung eines Bohrwerkzeugs 2 dient, das in einer Werkzeugaufnahmeeinheit 3 austauschbar eingespannt ist.

Die elektrischen Antriebsmittel umfassen eine erste elektromotorische Antriebseinheit 4, welche die Werkzeugaufnahmeeinheit 3 mit dem Bohrwerkzeug 2 in Drehbewegung versetzt. Eine benachbart hierzu angeordnete zweite elektromotorische Antriebseinheit 5 dient dazu, eine Schlagwerkseinheit 6 anzutreiben, welche eine alternierend lineare Bewegung für eine zusätzliche rückwärtige Beaufschlagung des Bohrwerkzeugs 2 generiert.

In der gezeigten Darstellungsebene ist die Drehachse A_{M1} der ersten elektromotorischen Antriebseinheit 4 sowie die Drehachse A_{M2} der zweiten elektromotorischen Antriebseinheit 5 parallel benachbart zueinander und quer zur Schlagwerksachse As angeordnet.

Um bei dieser winkligen Anordnung die Antriebsleistung in vorstehend beschriebener Weise auf das Bohrwerkzeug 2 zu übertragen, ist eine erste Getriebeeinheit 7 zur abgewinkelten Untersetzung der Drehbewegung der ersten elektromotorischen Antriebseinheit 4 für den Antrieb der Werkzeugaufnahmeeinheit 3 vorgesehen. In Kombination hiermit dient eine zweite Getriebeeinheit 8 einer Umwandlung der Drehbewegung der zweiten elektromotorischen Antriebseinheit 5 in die alternierend lineare Bewegung zum Antrieb der pneumatischen Schlagwerkseinheit 6.

Gemäß Fig. 2 verläuft die Drehachse A_{M1} der elektromotorischen Antriebseinheit 4 über einen Achsabstand Ax beabstandet - in dieser Ansichtsebene parallel beabstandet - zur Drehachse A_{M2} der zweiten elektromotorischen Antriebseinheit 5. Außerdem verlaufen beide Drehachsen A_{M1} und A_{M2} rechtwinklig bezüglich der Schlagwerksachse As.

Beide elektromotorischen Antriebseinheiten 4 und 5 sind als bürstenlose Gleichstrommotoren ausgebildet. Die elektromotorische Antriebseinheit 5 ist über die als Exzentertrieb ausgebildete zweite Getriebeeinheit 8 an die Schlagwerkseinheit 6 angeschlossen. Die zweite Getriebeeinheit 8 wird von einer endseitig ritzelförmig ausgebildeten Motorwelle 9 der zweiten elektromotorischen Antriebseinheit 5 angetrieben. Ein hiermit kämmendes Stirnrad 10 treibt einen Exzenter 11 an, welcher zur Umwandlung der antriebsseitigen Drehbewegung in eine Hin- und Her-Bewegung mit einem Pleuel 12 gekoppelt ist. Das Pleuel 12 ist an einen Erregerkolben 13 der Schlagwerkseinheit 6 angelenkt, welcher dynamisch abgedichtet innerhalb eines Führungsrohres 14 angeordnet ist. Durch die pneumatische Kraftübertragungsstrecke wird ein am gegenüberliegenden Ende des Führungsrohres 14 angeordneter Döpper 15 beaufschlagt, welcher die erzeugte Schlagenergie auf das - nicht weiter dargestellte - Bohrwerkzeug überträgt.

Die für den Drehantrieb des Bohrwerkzeugs vorgesehene erste elektromotorische Antriebseinheit 5 wirkt auf ein Schneckenrad 17 der als Schneckengetriebe ausgebildeten ersten Getriebeeinheit 7. Das Schneckenrad 17 ist um das Führungsrohr 14 der Schlagwerkseinheit 6 herum angeordnet und bildet mit diesem eine Loslagerstelle. Die weitere Drehmomentübertragung erfolgt über eine das Führungsrohr 14 umgebende Hohlwelle 18, die über eine Steckverzahnung eine Drehverbindung zur Werkzeugaufnahmeeinheit 3 herstellt.

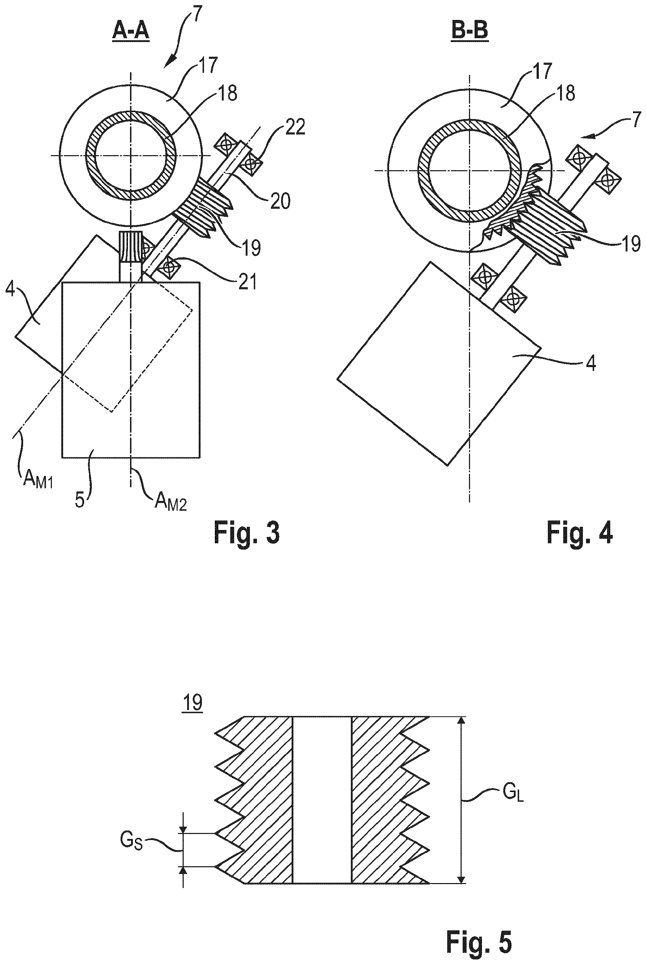

Gemäß Fig. 3 umfasst die als Schneckengetriebe ausgebildete erste Getriebeeinheit 7 neben dem bereits vorstehend erwähnten Schneckenrad 17, das drehfest mit der Hohlwelle 18 verbunden ist, eine Schneckenwelle 19, die koaxial an der Motorwelle 20 der ersten elektromotorischen Antriebseinheit 4 angebracht ist. Die Schneckenwelle 19 ist dabei zwischen zwei beabstandet zueinander am hervorstehenden Abschnitt der Motorwelle 20 angeordneten Wälzlagern 21 und 22 drehgelagert.

Die Drehachse A_{M1} der ersten elektromotorischen Antriebseinheit 4 verläuft in der Raumebene unter einem spitzen Versatzwinkel α bezüglich der demgegenüber senkrechten Drehachse A_{M2} der zweiten elektromotorischen Antriebseinheit 5.

Durch die in Fig. 4 separat für die erste elektromotorische Antriebseinheit 4 veranschaulichte Bauteillage ergibt sich ein entsprechend am Umfang des Schneckenrades 17 versetzter Zahneingriff der Schneckenwelle 19 der ersten Getriebeeinheit 7.

Gemäß Fig. 5 weist die hier als Einzelbauteil dargestellte Schneckenwelle 19 bei diesem Ausführungsbeispiel eine kontinuierliche Gewindesteigung Gs von 5 mm auf, gepaart mit einer Gewindelänge G_{L} von 20 mm.

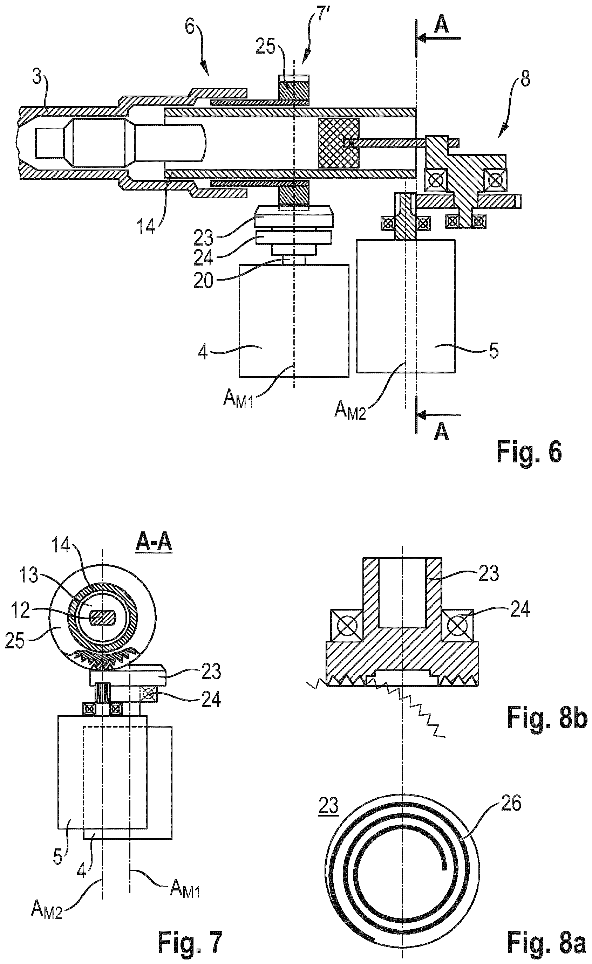

Bei der in Fig. 6 veranschaulichten zweiten Erfindungsvariante ist die erste Getriebeeinheit 7' als ein Planspiralgetriebe ausgebildet und besteht aus einem von der ersten elektromotorischen Antriebseinheit 4 angetrieben und über ein Wälzlager 23 drehgelagertes Planspiralrad 24, welches mit einem Zahnrad 25 zusammenwirkt, das koaxial bezüglich der Werkzeugaufnahmeeinheit 3 angeordnet ist.

Auch bei dieser Erfindungsvariante ist das abtreibende Getriebemittel, nämlich das Zahnrad 25, um das Führungsrohr 14 der Schlagwerkseinheit 6 herum angeordnet und bildet mit dem Führungsrohr 14 eine Loslagerstelle. Die Drehmomentübertragung erfolgt hier ebenfalls über eine das Führungsrohr 14 umgebende Hohlwelle 18, die andererseits an der Werkzeugaufnahmeeinheit 3 angebracht ist. Die übrigen Komponenten der zweiten Erfindungsvariante stimmen mit der vorstehenden Figurenbeschreibung der ersten Erfindungsvariante überein, worauf hiermit insofern Bezug genommen wird.

Gemäß der in Fig. 7 dargestellten Ansicht verläuft die Drehachse A_{M1} der ersten elektromotorischen Antriebseinheit 4 in der Raumebene parallel zur Drehachse A_{M2} der zweiten elektromotorischen Antriebseinheit 5. Hierdurch lässt sich eine besonders kompaktbauende Unterbringung der Komponenten des Antriebsstrangs samt Getriebeeinheiten realisieren.

Während die Fig. 8a in Draufsicht den spiralförmigen Verlauf von Gewindegängen 26 des Planspiralrads 23 darstellt, zeigt die Seitenansicht gemäß Fig. 8b die Anordnung des Wälzlagers 24 zur Drehlagerung des Planspiralrads 23.

Die Erfindung ist nicht beschränkt auf die vorstehend beschriebenen bevorzugten Ausführungsformen, sondern umfasst auch Abwandlungen hiervon, welche vom Schutzbereich der nachfolgenden nebengeordneten Ansprüche mit umfasst sind. So ist es beispielsweise auch möglich, die Schlagwerkseinheit nach einem anderen Wirkprinzip auszubilden oder für die zweite Getriebeeinheit anstelle eines Exzentergetriebes, beispielsweise einen Kurbeltrieb oder dergleichen, zu verwenden.

### BEZUGSZEICHENLISTE

- 1: Maschinengehäuse
- 2: Bohrwerkzeug
- 3: Werkzeugaufnahmeeinheit
- 4: erste elektromotorische Antriebseinheit
- 5: zweite elektromotorische Antriebseinheit
- 6: Schlagwerkseinheit
- 7: erste Getriebeeinheit
- 8: zweite Getriebeeinheit
- 9: zweite Motorwelle
- 10: Zahnrad
- 11: Steuerrad
- 12: Pleuel
- 13: Erregerkolben
- 14: Führungsrohr
- 15: Döpper
- 17: Schneckenrad
- 18: Hohlwelle
- 20: erste Motorwelle
- 21: Wälzlager
- 22: Wälzlager
- 23: Planspiralrad
- 24: Wälzlager
- 25: Zahnrad
- 26: Gewindegänge

- A_{M1}: Drehachse der ersten Antriebseinheit
- A_{M2}: Drehachse der ersten Antriebseinheit
- A_{S}: Schlagwerksachse
- G_{S}: Gewindesteigung
- G_{L}: Gewindelänge

## Patentansprüche

1. Bohrhammermaschine mit einem handhaltbaren Maschinengehäuse (1) zur Unterbringung elektrischer Antriebsmittel, umfassend:
- eine erste elektromotorische Antriebseinheit (4), die dazu eingerichtet ist, eine Werkzeugaufnahmeeinheit (3) für ein Bohrwerkzeug (2) mit einer Drehbewegung anzutreiben,
- eine zweite elektromotorische Antriebseinheit (5), die dazu eingerichtet ist, eine Schlagwerkseinheit (6) zur Erzeugung einer alternierend linearen Bewegung für eine zusätzlich rückwärtige Beaufschlagung des Bohrwerkzeugs (2) anzutreiben, wobei
- die Drehachsen (A_{M1}, A_{M2}) der beiden elektromotorischen Antriebseinheiten (4, 5) benachbart zueinander und quer zur Schlagwerksachse (As) verlaufen, wozu
- eine erste Getriebeeinheit (7; 7`) zur abgewinkelten Untersetzung einer Drehbewegung der ersten elektromotorischen Antriebseinheit (4) für den Antrieb der Werkzeugaufnahmeeinheit (3) vorgesehen ist, und wozu
- eine zweite Getriebeeinheit (8) zur Umwandlung der Drehbewegung der zweiten elektromotorischen Antriebseinheit (5) in die alternierend lineare Bewegung zum Antrieb der Schlagwerkseinheit (6) vorgesehen ist,
**dadurch gekennzeichnet, dass** die erste Getriebeeinheit (7) als Schneckengetriebe derart ausgebildet ist, dass
- eine Schneckenwelle (19) koaxial an einer Motorwelle (20) der ersten elektromotorischen Antriebseinheit (4) angeordnet ist, und
- ein hiermit zusammenwirkendes Schneckenrad (17) koaxial bezüglich der Werkzeugaufnahmeeinheit (3) angeordnet ist.

2. Bohrhammermaschine nach Anspruch 1,
**dadurch gekennzeichnet, dass** die Schneckenwelle (19) zwischen zwei axial beabstandet zueinander am hervorstehenden Abschnitt der Motorwelle (20) angeordneten Wälzlagern (21, 22) drehgelagert ist.

3. Bohrhammermaschine nach einem der Ansprüche 1 oder 2,
**dadurch gekennzeichnet, dass** das Schneckenrad (17) um ein Führungsrohr (14) der Schlagwerkseinheit (6) herum angeordnet ist und mit diesem eine Loslagerstelle bildet.

4. Bohrhammermaschine nach einem der vorhergehenden Ansprüche,
**dadurch gekennzeichnet, dass** die Drehachse (A_{M1}) der ersten elektromotorischen Antriebseinheit (4) in der Raumebene unter einem Versatzwinkel (α) bezüglich der Drehachse (A_{M2}) der zweiten elektromotorischen Antriebseinheit (5) verläuft.

5. Bohrhammermaschine nach Anspruch 4,
**dadurch gekennzeichnet, dass** der Versatzwinkel (α) abhängig vom Durchmesser des Schneckenrades (17) im Bereich zwischen 10 und 60 Grad, vorzugsweise im Bereich zwischen 20 und 40 Grad, liegt.

6. Bohrhammermaschine nach einem der vorhergehenden Ansprüche,
**dadurch gekennzeichnet, dass** die Schneckenwelle (19) eine kontinuierliche Gewindesteigung zwischen 1 bis 10 mm aufweist.

7. Bohrhammermaschine nach Anspruch 6,
**dadurch gekennzeichnet, dass** sich Schneckenwelle (19) eine Gewindelänge zwischen 5 bis 30 mm aufweist.

8. Bohrhammermaschine mit einem handhaltbaren Maschinengehäuse (1) zur Unterbringung elektrischer Antriebsmittel, umfassend:
- eine erste elektromotorische Antriebseinheit (4), die dazu eingerichtet ist, eine Werkzeugaufnahmeeinheit (3) für ein Bohrwerkzeug (2) mit einer Drehbewegung anzutreiben,
- eine zweite elektromotorische Antriebseinheit (5), die dazu eingerichtet ist, eine Schlagwerkseinheit (6) zur Erzeugung einer alternierend linearen Bewegung für eine zusätzlich rückwärtige Beaufschlagung des Bohrwerkzeugs (2) anzutreiben, wobei
- die Drehachsen (A_{M1}, A_{M2}) der beiden elektromotorischen Antriebseinheiten (4, 5) benachbart zueinander und quer zur Schlagwerksachse (As) verlaufen, wozu
- eine erste Getriebeeinheit (7; 7`) zur abgewinkelten Untersetzung einer Drehbewegung der ersten elektromotorischen Antriebseinheit (4) für den Antrieb der Werkzeugaufnahmeeinheit (3) vorgesehen ist, und wozu
- eine zweite Getriebeeinheit (8) zur Umwandlung der Drehbewegung der zweiten elektromotorischen Antriebseinheit (5) in die alternierend lineare Bewegung zum Antrieb der Schlagwerkseinheit (6) vorgesehen ist,
**dadurch gekennzeichnet, dass** die erste Getriebeeinheit (7`) als Planspiralgetriebe derart ausgebildet ist, dass
- ein Planspiralrad (23) koaxial an einer Motorwelle (20) der ersten elektromotorischen Antriebseinheit (4) angeordnet ist, und
- ein hiermit zusammenwirkendes Zahnrad (25) koaxial bezüglich der Werkzeugaufnahmeeinheit (3) angeordnet ist.

9. Bohrhammermaschine nach Anspruch 8,
**dadurch gekennzeichnet, dass** das Planspiralrad (23) am distalen Ende der Motorwelle (20) angeordnet ist, die über ein axial benachbartes Wälzlager (24) drehgelagert ist.

10. Bohrhammermaschine nach einem der Ansprüche 8 oder 9,
**dadurch gekennzeichnet, dass** das Planspiralrad (23) einen Flankenwinkel zwischen 40 bis 70 Grad sowie eine Steigung zwischen 0,5 bis 5 mm, vorzugsweise zwischen 1 bis 3 mm besitzt.

11. Bohrhammermaschine nach einem der Ansprüche 8 bis 10,
**dadurch gekennzeichnet, dass** das Zahnrad (25) um ein Führungsrohr (14) der Schlagwerkseinheit (6) herum angeordnet ist und mit diesem eine Loslagerstelle bildet.

12. Bohrhammermaschine nach einem der vorhergehenden Ansprüche,
**dadurch gekennzeichnet, dass** eine das Führungsrohr (14) umgebende Hohlwelle (18) zur Herstellung einer Drehverbindung zwischen dem Schneckenrad (17) beziehungsweise dem Zahnrad (25) einerseits und der Werkzeugaufnahmeeinheit (3) andererseits vorgesehen ist.

13. Bohrhammermaschine nach einem der vorhergehenden Ansprüche,
**dadurch gekennzeichnet, dass** die erste Getriebeeinheit (7) ausgehend von einer Eingangsdrehzahl im Bereich zwischen 5.000 bis 30.000 min⁻¹ der ersten Antriebseinheit (4) ein Untersetzungsverhältnis von 1:10 bis 1:100 aufweist, um die Werkzeugaufnahmeeinheit (3) anzutreiben.

14. Bohrhammermaschine nach einem der vorhergehenden Ansprüche,
**dadurch gekennzeichnet, dass** die Drehachse (A_{M1}) der ersten elektromotorischen Antriebseinheit (4) rechtwinklig bezüglich der Schlagwerksachse (As) verläuft.

15. Bohrhammermaschine nach einem der vorhergehenden Ansprüche,
**dadurch gekennzeichnet, dass** die Drehachse (A_{M2}) der zweiten elektromotorischen Antriebseinheit (5) rechtwinklig bezüglich der Schlagwerksachse (As) verläuft.

16. Bohrhammermaschine nach einem der vorhergehenden Ansprüche,
**dadurch gekennzeichnet, dass** die zweite Getriebeeinheit (8) als ein Exzentertrieb ausgebildet ist.

17. Bohrhammermaschine nach einem der vorstehenden Ansprüche,
**dadurch gekennzeichnet, dass** die erste elektromotorische Antriebseinheit (4) und die zweite elektromotorische Antriebseinheit (5) als bürstenlose Gleichstrommotoren ausgebildet sind.

18. Bohrhammermaschine nach einem der vorstehenden Ansprüche,
**dadurch gekennzeichnet, dass** die quer zur Schlagwerksachse (As) verlaufenden elektromotorischen Antriebseinheiten (4, 5) unmittelbar benachbart zueinander angeordnet sind.

19. Bohrhammermaschine nach Anspruch 18,
**dadurch gekennzeichnet, dass** die Drehachsen (A_{M1,} A_{M2}) der beiden elektromotorischen Antriebseinheiten (4, 5) mit einem Achsabstand (Aₓ) im Bereich zwischen 50 bis 250 mm zueinander angeordnet sind.

20. Bohrhammermaschine nach einem der vorstehenden Ansprüche,
**dadurch gekennzeichnet, dass** alle leistungsübertragenden Komponenten der ersten Getriebeeinheit (7) und der zweiten Getriebeeinheit (8) als Metallteile ausgebildet sind, wobei zumindest eine der jeweiligen Komponenten aus einer Buntmetall-Legierung besteht, ausgewählt aus einer Legierungsgruppe, umfassend Messing, Bronze, Rotguss.
